# EUROPÄISCHE PATENTSCHRIFT

(11) **EP 1 602 886 B1**
(45) Veröffentlichungstag und Bekanntmachung des Hinweises auf die Patenterteilung: **31.08.2016**
(21) Anmeldenummer: 05011289.5
(22) Anmeldetag: 25.05.2005
(51) Int. Cl.: F24H 1/28, F24H 8/00, F24H 9/00

(54) **Heizkessel**
Boiler
Chaudière

(30) Priorität: 02.06.2004 DE 202004008763 U
(43) Veröffentlichungstag der Anmeldung: 07.12.2005
(73) Patentinhaber: ROBERT BOSCH GMBH, 70442 Stuttgart (DE)
(72) Erfinder: Eule, Christoph, 35794 Waldernbach (DE); Gerling, Detlev, Dr., 35041 Marburg (DE); Henrich, Holger, 35633 Lahnau (DE); Müller, Thomas, 35649 Bischoffen (DE); Rollmann, Jürgen, 35457 Lollar (DE)

(56) Entgegenhaltungen:
- DE-A1- 1 753 200
- DE-A1- 3 519 756
- DE-A1- 19 614 493
- DE-B- 1 268 809
- DE-C- 255 854
- DE-U1- 20 109 275
- DE-U1- 20 119 126
- DE-U1- 20 220 413

## Beschreibung

Die Erfindung betrifft einen Heizkessel, insbesondere einen Brennwert-Heizkessel nach dem Oberbegriff des Patentanspruches 1.

Derartige Brennwert-Heizkessel werden mit einem Öl- oder Gasgebläsebrenner in einer Brennkammer befeuert. In nachgeschalteten Heizgaszügen erfolgt dann der Wärmetausch zwischen den Heizgasen und dem Kesselwasser in einem umgebenden Wasserraum mit Vor- und Rücklaufanschlüssen. Speziell bei Brennwert-Heizkesseln werden dabei die Heizgase bis auf ein sehr niedriges Temperaturniveau unter den Taupunkt abgekühlt, um die latent im Abgas enthaltene Kondensationswärme zu nutzen. Für den Wärmeübergang bei entsprechend kleinen Temperaturdifferenzen zwischen Heizgas und Heizungswasser werden einerseits große Wärmetauscherflächen benötigt, andererseits sind aber Bauvolumen und Materialaufwand begrenzt. Zusätzlich müssen die verwendeten Materialien, wie zum Beispiel der relativ teuere Werkstoff Edelstahl, erhöhte Anforderungen bezüglich der Korrosionsbeständigkeit erfüllen.

Grundsätzlich sind Heizkessel mit einer oberen, horizontal angeordneten Brennkammer und einem darunter angeordneten, horizontal liegenden Rohrbündel-Wärmetauscher bekannt, dessen einzelne Rohre mit der Brennkammer verbunden sind. Die DE 84 22 564 U1 zeigt beispielsweise einen gattungsgemäßen Heizkessel mit einer oberen Brennkammer, von deren Boden aus mehrere spiralförmig gewickelte Heizgaszugrohre in einem Wasserraum nach unten verlaufen. Somit bilden mehrere Rohre einen Rohrbündel-Wärmetauscher, der in einem Abgas- bzw. Kondensatsammler mündet. Einen serpentinenartigen Heizgaszug aus mehreren Rohren, die von einer oberen Brennkammer ausgehen, offenbart die DE 201 19 126 U1. DE 1 753 200 A zeigt den Oberbegriff von Anspruch 1.

Der Erfindung liegt die Aufgabe zugrunde, einen kompakt aufgebauten Heizkessel, insbesondere einen Brennwert-Heizkessel, zu schaffen.

Erfindungsgemäß wird dies mit den Merkmalen des Patentzanspruches 1 gelöst. Vorteilhafte Weiterbildungen sind den Unteransprüchen zu entnehmen.

Der Heizkessel besitzt eine horizontale Brennkammer für Umkehrfeuerung mit einer Brennkammertür auf der Vorderseite, einen Abgassammler im unteren Bereich sowie einen Kesselmantel um einen Wasserraum mit einem oberen Vorlauf- und einem unteren Rücklaufanschluss.

Gekennzeichnet ist der Heizkessel durch einen Heizgaszug aus mehreren U-förmigen, voneinander beabstandeten Rohren. Diese umgreifen die Brennkammer mit Abstand im Wasserraum und münden an der Vorderwand, ober- und unterhalb der BrennkammerÖffnung, mit ihren Enden ein bzw. aus. Dafür besitzen die Rohre des Heizgaszuges jeweils die gleiche Form oder es kommen zwei oder mehrere unterschiedlich geformte Rohre zum Einsatz, wenn größere Rohrbündel realisiert werden sollen. Durch ihren teilweisen Versatz in vertikaler Richtung und/oder ihre teilweise geringfügige Schrägstellung zur vertikalen Achse wird jeweils ein kompaktes Rohrbündel gebildet.

Die Enden der Rohre des Heizgaszuges, also die Einmündungen, sind oberhalb der Brennkammer auf der Vorderwand etwas zurück versetzt angeordnet, damit bis zur Innenseite der Brennkammertür ein Abstand bzw. ein Zwischenraum zur Umlenkung der Heizgase aus der Brennkammer entsteht. Daher sind die oberen Schenkel der U-förmigen Rohre etwas kürzer. Unterhalb der Brennkammer auf der Vorderwand münden die Enden der Rohre des Heizgaszuges aus. Hier ist vorzugsweise ein Abgassammler an die Vorderwand angeflanscht.

In einer bevorzugten Ausführungsform ist weiterhin ein Kondensatablauf in Form einer vertikalen Rinne unterhalb der Brennkammer in die Vorderwand eingeprägt. Durch seine Gestaltung und Positionierung dient der Kondensatablauf gleichzeitig als Siphon.

Jeweils mindestens ein horizontales Strömungsleitblech erstreckt sich im Wasserraum unterhalb des Vorlaufanschlusses und oberhalb des Rücklaufanschlusses, ausgehend von der Rückwand, bis etwa in die Mitte des Wasserraumes. Außerdem ist ein horizontales Strömungsleitblech im Wasserraum unterhalb der Brennkammer angeordnet. Dieses erstreckt sich, ausgehend von der Vorderwand, bis etwa in die Mitte des Wasserraumes und schließt beidseitig mit den Innenseiten des Kesselmantels ab.

Alternativ zur Verwendung von glatten Heizgaszugrohren können die Rohre des Heizgaszuges auch mit Oberflächen vergrößernden oder Turbulenz erzeugenden Strukturen sowie Prägungen versehen sein und/oder einen dem Volumen der Heizgase angepassten, in Strömungsrichtung abnehmenden Querschnitt besitzen. Bei der Gestaltung der U-förmigen Rohre kann ein durchgehender Radius oder eine Aufteilung in zwei Radien mit einem dazwischen liegenden geraden Teilstück ausgewählt werden.

Es entsteht mit dem erfindungsgemäßen Aufbau ein wirtschaftlich zu fertigender, kompakt aufgebauter Heizkessel, insbesondere Brennwert-Heizkessel. Unterschiedliche Varianten, beispielsweise Kesseltypen für Heizwert- oder Brennwertnutzung und/oder für verschiedene Leistungsgrößen, können über die Anzahl der Rohre des Heizgaszuges einfach realisiert werden, weil damit der Wärmeübergang direkt beeinflusst wird. Die U-Form der Rohre lässt eine fast ungehinderte Wärmeausdehnung zu, so dass dadurch ein hinsichtlich Wärmespannungen günstiger Gesamtaufbau entsteht. Außerdem sind alle Heizgaszüge leicht von der Vorderseite des Heizkessels aus zu reinigen.

Die Zeichnung stellt ein Ausführungsbeispiel der Erfindung dar. Es zeigt jeweils einen Heizkessel:

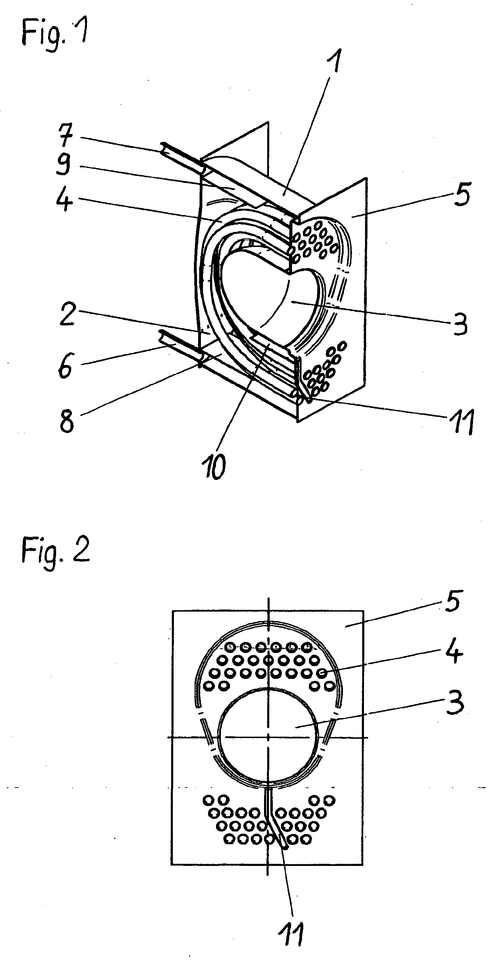

- Fig. 1:: in einer perspektivischen Ansicht,
- Fig. 2:: in der Vorderansicht,

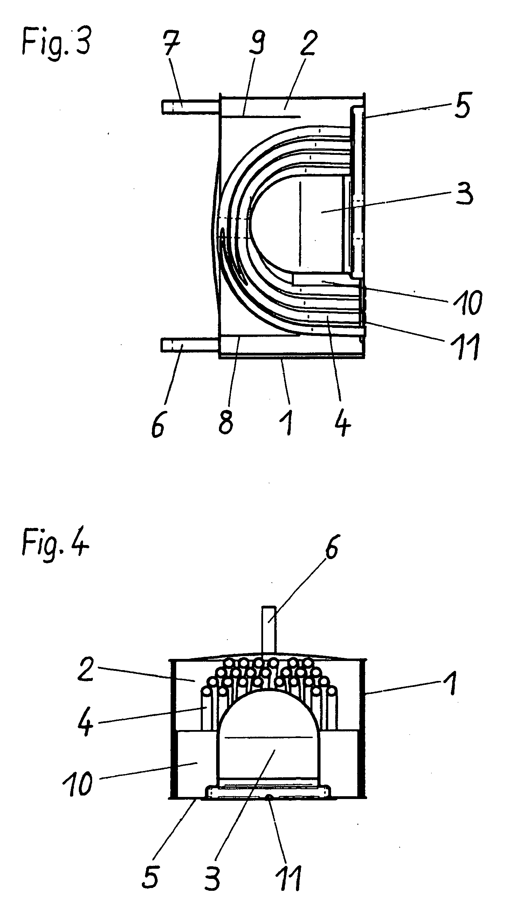

- Fig. 3:: in der Seitenansicht im vertikalen Schnitt und
- Fig. 4:: in der Draufsicht im horizontalen Schnitt.

Der Heizkessel besteht aus einem Kesselmantel 1 aus Stahlblech, welcher einen Wasserraum 2 einschließt. In dessen Zentrum befindet sich die liegende Brennkammer 3, welche von einem Heizgaszug aus mehreren U-förmigen Rohren 4 mit Abstand umgeben ist. Diese münden auf der Vorderwand 5 mit ihren Enden ein und aus.

Die Heizgase werden im Bereich der etwas zurück versetzten Vorderwand 5 oberhalb der Brennkammer 3 nach oben umgelenkt und strömen in die U-förmigen Rohre 4. Abgekühlt erreichen Sie den nicht dargestellten Abgassammler im unteren, vorderen Bereich. Das Heizmedium tritt über den Rücklaufanschluss 6 in den Wasserraum 2 im rückwärtigen, unteren Bereich ein und aus dem Vorlaufanschluss 7 im rückwärtigen, oberen Bereich wieder in den angeschlossenen Heizkreis aus.

Um eine gleichmäßige Durchströmung des Wasserraumes 2 zu erreichen, sind horizontal ausgerichtete Strömungsleitbleche 8, 9 im Wasserraum 2 oberhalb des Rücklaufanschlusses 6 und unterhalb des Vorlaufanschlusses 7 angebracht. Ein weiteres horizontales Strömungsleitblech 10 befindet sich im Wasserraum 2 unterhalb der Brennkammer 3. Damit wird Kondensatbildung in dieser vermieden, weil kaltes Wasser aus dem Rücklaufanschluss 6 nicht direkt an die Brennkammerwand gelangen kann. Beispielsweise beim Anfahren des Heizkessels entstehendes Kondensat kann aus der Brennkammer 3 über einen Kondensatablauf 11 nach unten abgeleitet werden. Dieser ist in Form einer vertikalen Rinne unterhalb der Brennkammer 3 in die Vorderwand 5 eingeprägt.

## Patentansprüche

1. Heizkessel, insbesondere Brennwert-Heizkessel, mit einer horizontalen Brennkammer (3) für Umkehrfeuerung, einer Brennkammertür auf der Vorderseite, einem aus mehreren Rohren (4) bestehenden Heizgaszug als Wärmetauscher zwischen den Heizgasen im Inneren und dem umgebenden kesselwasser, einem Abgassammler im unteren Bereich sowie einem Kesselmantel (1) um einen Wasserraum (2) mit einem oberen Vorlauf- und einem unteren Rücklaufanschluss (7, 6).
**dadurch gekennzeichnet, dass** der Heizgaszug aus mehreren U-förmigen, voneinander beabstandeten Rohren (4) besteht welche die Brennkammer (3) mit Abstand im Wasserraum (2) umgreifen und an der Vorderwand (5) mit ihren Enden ein- und ausmünden, dass die Rohre (4) des Heizgaszuges jeweils die gleiche Form besitzen und durch ihren teilweisen Versatz in vertikaler Richtung und/oder ihre teilweise geringfügige Schrägstellung zur vertikalen Achse ein kompaktes Rohrbändel bilden.

2. Heizkessel nach Anspruch 1,
**dadurch gekennzeichnet, dass** die Enden der Rohre (4) des Heizgaszuges oberhalb der Brennkammer (3) auf der Vorderwand (5) etwas zurück versetzt angeordnet sind, um bis zur Innenseite der Brennkammertür einen Abstand zur Umlenkung der Heizgase aus der Brennkammer (3) auszubilden, und dass die Enden der Rohre (4) des Heizgaszuges unterhalb der Brennkammer (3) auf der Vorderwand (5) in einen Abgassammler ausmünden.

3. Heizkessel nach Anspruch 1 oder 2.
**dadurch gekennzeichnet, dass** ein Kondensatablauf (11) in Form einer vertikalen Rinne unterhalb der Brennkammer (3) in die Vorderwand (5) singeformt ist.

4. Heizkessel nach einem der Ansprüche 1 bis 3.
**dadurch gekennzeichnet, dass** der in die Vorderwand (5) eingeformte Kondensatablauf (11) durch seine Gestaltung und Positionierung gleichzeitig als Siphon dient.

5. Heizkessel nach einem der Ansprüche 1 bis 4,
**dadurch gekennzeichnet, dass** sich jeweils mindestens ein horizontales Strömungsleitblech (8, 9) im Wasserraum (2) unterhalb des Vorlaufanschlusses (7) und oberhalb des Rück-laufanschlusses (6), ausgehend von diesen, bis etwa in die Mitte des Wasserraumes (2) erstreckt.

6. Heizkessel nach einem der Ansprüche 1 bis 5,
**dadurch gekennzeichnet, dass** ein horizontales Strömungsleitblech (10) im Wasserraum (2) unterhalb der Brennkammer (3) angeordnet ist, welches sich, ausgehend von der Vorderwand (5), bis etwa in die Mitte des Wasserraumes (2) erstreckt und beidseitig bis an die Innenseiten des Kesselmantels (1) reicht.

7. Heizkessel nach einem der Ansprüche 1 bis 6,
**dadurch gekennzeichnet, dass** die Rohre (4) des Heizgaszuges mit Oberflächen vergrößernden oder Turbulenz erzeugenden Strukturen sowie Prägungen versehen sind und/oder einen dem Volumen der Heizgase angepassten, in Strömungsrichtung abnehmenden Querschnitt besitzen.

## Claims

1. Boiler, in particular condensing boiler, with a horizontal reverse-flame combustion chamber (3), a combustion chamber door on the front side, a heating gas flue, consisting of a number of tubes (4), as a heat exchanger between the heating gases in the interior and the surrounding boiler water, a flue-gas manifold in the lower region and a boiler shell (1) around a water space (2) with an upper flow connection (7) and a lower return connection (6),
**characterized in that** the heating gas flue consists of a number of spaced-apart U-shaped tubes (4), which reach around the combustion chamber (3) at a distance in the water space (2) and start and finish with their ends at the front wall (5), **in that** the tubes (4) of the heating gas flue are each of the same form and, as a result of their partial offset in the vertical direction and/or their partial slight sloping in relation to the vertical axis, from a compact cluster of tubes.

2. Boiler according to Claim 1,
**characterized in that** the ends of the tubes (4) of the heating gas flue above the combustion chamber (3) are arranged slightly set back on the front wall (5), in order to form a distance up to the inner side of the combustion chamber door for diverting the gases out of the combustion chamber (3), and **in that** the ends of the tubes (4) of the heating gas flue under the combustion chamber (3) finish on the front wall (5) by entering a flue-gas manifold.

3. Boiler according to Claim 1 or 2,
**characterized in that** a condensate outlet (11) in the form of a vertical channel is incorporated in the front wall (5) under the combustion chamber (3) .

4. Boiler according to one of Claims 1 to 3,
**characterized in that**, as a result of its design and positioning, the condensate outlet (11) incorporated in the front wall (5) serves at the same time as a siphon.

5. Boiler according to one of Claims 1 to 4,
**characterized in that** at least one horizontal flow baffle (8, 9) respectively extends in the water space (2) under the flow connection (7) and above the return connection (6), starting from said connections, to approximately the middle of the water space (2).

6. Boiler according to one of Claims 1 to 5,
**characterized in that** a horizontal flow baffle (10) is arranged in the water space (2) under the combustion chamber (3), extends from the front wall (5) to approximately the middle of the water space (2) and on both sides reaches up to the inner sides of the boiler shell (1).

7. Boiler according to one of Claims 1 to 6,
**characterized in that** the tubes (4) of the heating gas flue are provided with structures and shapings that increase surfaces or produce turbulence and/or have a cross section that is adapted to the volume of the heating gases and decreases in the direction of flow.

## Revendications

1. Chaudière de chauffage, en particulier chaudière de chauffage à condensation, présentant
une chambre horizontale de combustion (3) permettant une combustion inversée,
une porte de chambre de combustion située sur le côté avant,
une évacuation de gaz chauds constituée de plusieurs tubes (4) et servant d'échangeur de chaleur entre les gaz chauds situés à l'intérieur et l'eau de chaudière qui les entoure,
un collecteur de gaz de fumée situé dans la partie avant ainsi qu'une enveloppe de chaudière (1) qui entoure un espace (2) à eau doté d'un raccordement supérieur de départ et un raccordement inférieur de retour (7, 6),
**caractérisée en ce que**
l'extraction des gaz chauds est constituée de plusieurs tubes (4) en forme de U maintenus à distance les uns des autres, entourant la chambre de combustion (3) à distance dans l'espace (2) à eau et dont les extrémités débouchent dans la partie avant (5) ou en partent,
**en ce que** les tubes (4) d'extraction de gaz chauds présentent tous la même forme et forment un faisceau compact de tubes par leur décalage partiel dans la direction verticale et/ou par leur position légèrement oblique par rapport à l'axe vertical.

2. Chaudière de chauffage selon la revendication 1,
**caractérisée en ce que** sur la paroi avant (5), les extrémités des tubes (4) d'extraction de gaz chauds sont disposées légèrement en retrait au-dessus de la chambre de combustion (3) pour former par rapport au côté intérieur de la porte de la chambre de combustion une distance de renvoi des gaz chauds qui sortent de la chambre de combustion (3) et **en ce que** sur la paroi avant (5), les extrémités des tubes (4) d'extraction de gaz chauds débouchent en dessous de la chambre de combustion (3) dans un collecteur de gaz de fumée.

3. Chaudière de chauffage selon les revendications 1 ou 2, **caractérisée en ce qu'**une évacuation (11) de condensats présentant la forme d'une rigole verticale est formée dans la paroi avant (5) en dessous de la chambre de combustion (3).

4. Chaudière de chauffage selon l'une des revendications 1 à 3, **caractérisée en ce que** grâce à sa forme et à son positionnement, l'évacuation (11) de condensats formée dans la paroi avant (5) sert en même temps de siphon.

5. Chaudière de chauffage selon l'une des revendications 1 à 4, **caractérisée en ce qu'**au moins une tôle (8, 9) horizontale de guidage d'écoulement s'étend dans l'espace (2) à eau en dessous du raccordement de départ (7) et au-dessus du raccordement de retour (6), et à partir de ces derniers sensiblement jusqu'au milieu de l'espace (2) à eau.

6. Chaudière de chauffage selon l'une des revendications 1 à 5, **caractérisée en ce qu'**une tôle horizontale (10) de guidage d'écoulement est disposée dans l'espace (2) à eau en dessous de la chambre de combustion (3) et, partant de la paroi avant (5), s'étend sensiblement jusqu'au milieu de l'espace (2) à eau et des deux côtés jusqu'aux côtés intérieurs de l'enveloppe (1) de la chaudière.

7. Chaudière de chauffage selon l'une des revendications 1 à 6, **caractérisée en ce que** les tubes (4) d'extraction de gaz chauds sont dotés de structures d'agrandissement de la surface ou de formation de turbulences ainsi que de gaufrages et/ou possèdent une section transversale adaptée au volume des gaz chauds et se rétrécissant dans la direction de l'écoulement.
